# EUROPÄISCHE PATENTSCHRIFT

(11) **EP 3 947 220 B1**
(45) Veröffentlichungstag und Bekanntmachung des Hinweises auf die Patenterteilung: **09.04.2025**
(21) Anmeldenummer: 20712323.3
(22) Anmeldetag: 17.03.2020
(51) Int. Cl.: B65G 54/02, B65G 43/08, B41J 3/407, B67C 3/00, B67C 7/00, G01N 21/90, B67C 3/24, B65G 47/86

(54) **FÖRDEREINRICHTUNG UND VERFAHREN ZUM TRANSPORTIEREN EINES BEHÄLTERS**
CONVEYING DEVICE AND METHOD FOR TRANSPORTING A CONTAINER
CONVOYEUR ET PROCÉDÉ POUR LE TRANSPORT D'UN CONTENANT

(30) Priorität: 04.04.2019 DE 102019108860
(43) Veröffentlichungstag der Anmeldung: 09.02.2022
(73) Patentinhaber: KRONES AG, 93073 Neutraubling (DE)
(72) Erfinder: KILGENSTEIN, Torsten, 93073 Neutraubling (DE)
(74) Vertreter: v. Bezold & Partner Patentanwälte - PartG mbB
(86) Internationale Anmeldenummer: PCT/EP2020/057311
(87) Internationale Veröffentlichungsnummer: WO 2020/200771

(56) Entgegenhaltungen:
- EP-A1- 2 423 111
- DE-A1- 102013 212 377
- DE-A1- 102013 218 403
- DE-A1- 102014 214 696
- JP-A- 2005 001 055
- JP-A- H08 210 992

## Beschreibung

### Technisches Gebiet

Die Erfindung betrifft eine Fördereinrichtung und ein Verfahren zum Transportieren eines Behälters für eine Behälterbehandlungsanlage.

### Technischer Hintergrund

Bei Transportvorrichtungen zum Transportieren von Behältern in einer Behälterbehandlungsanlage zum Befüllen und Verschließen von Behältern kann es zu Situationen kommen, in denen die Flüssigkeit im Behälter überschwappt. Dies kann beispielsweise bei gefüllten und offenen Behältern passieren, wenn schnell angefahren oder abrupt abgebremst wird oder bei einer Kurvenfahrt. Das Überschwappen von Flüssigkeit aus den Behältern kann zu Verunreinigungen der Behälterbehandlungsanlage und zu einer ungenügenden Füllmenge in den Behälter führen.

EP 2 987 764 A1 offenbart eine Formfüllmaschine zum Ausformen und Füllen eines Kunststoffvorformlings mit einer Flüssigkeit in einer Behandlungsstation. Eine Schwappschutzvorrichtung ist zur Vermeidung von Überschwappen einer Flüssigkeit aus dem Behälter vorgesehen. In einem Auslaufstern kann der Behälter definiert mit einer Neigung der Flüssigkeitsoberfläche mitgeschwenkt und ein Überschwappen verhindert werden. Die Neigung kann sich aufgrund der auf den Behälter wirkenden Zentripetal- und Gravitationskraft einstellen, oder die Neigung kann entlang eines Auslaufwegs der Auslaufvorrichtung aufgrund einer mechanischen Führung im Auslaufstern vorgegeben sein. Weiterhin kann eine Steuervorrichtung zum Ausgeben eines Steuersignals für die Steuerung der Neigung des Schwenkhalters entlang eines Auslaufwegs des Auslaufsterns sowie eine Kamera zum Überwachen der Neigung vorgesehen sein.

Die EP 2 522 605 A1 offenbart eine Vorrichtung mit einem Hauptträger und Transportelementen zum Transportieren von Kunststoffbehältern. Jedes Transportelement ist an einem Arm angeordnet und kann gegenüber dem Hauptträger um eine vorgegebene geometrische Schwenkachse schwenken. Die unabhängig voneinander steuerbaren Antriebe sind vorgesehen, um Schwenkbewegungen von Transportelementen zu erzeugen. Jedes Transportelement ist auch linear in Bezug auf die Schwenkachse bewegbar, um die es schwenken kann.

Die unabhängig steuerbaren Antriebe sind vorgesehen, um eine lineare Bewegung von Transportelementen zu erzeugen.

Die JP 2005 001055A offenbart eine Robotervorrichtung, die Flüssigkeit und Pulver usw. in einem Behälter lagert und die Flüssigkeit und das Pulver usw. effizient transportiert, ohne sie aus einer Öffnung des Behälters zu verschütten. Die JP 2005 001055A offenbart die Merkmale des Oberbegriffs des Anspruchs 1.

Die EP 2 423 111 A1 betrifft eine Fördervorrichtung zum Fördern von Behältnissen. Die Fördervorrichtung umfasst mindestens eine auf einer Bahn bewegbare Transporteinheit zum Transportieren von mindestens einem Behältnis, die zumindest mittelbar mit einer Antriebseinheit verbunden ist, und die eine auf der Bahn bewegbare Transportkomponente und eine gegenüber dieser Transportkomponente bevorzugt bewegbare Aufnahmeeinrichtung zum Aufnehmen von dem mindestens einem Behältnis aufweist. Die Aufnahmeeinrichtung ist zum Ausrichten des Behältnisses gegenüber der Bahn zumindest mittelbar und zumindest zeitweise in Abhängigkeit von mindestens einer beim Bewegen der Transporteinheit auf die Aufnahmeeinrichtung und/oder das Behältnis einwirkenden Kraft ausgerichtet.

Die DE 10 2013 212377 A1 betrifft eine Vorrichtung zum Transport von Flüssigkeiten, umfassend wenigstens einen Behälter zum Aufnehmen der zu transportierenden Flüssigkeit, eine Antriebseinheit zum Bewegen des Behälters, eine Lagerung, um den Behälter schwenkbar um eine Achse zu lagern, eine Aktuatoreinrichtung, um den Behälter um die Achse zu schwenken, und eine Steuereinheit. Die Steuereinheit steuert eine Transportbewegung des Behälters und eine Betätigung der Aktuatoreinrichtung. Die Steuereinheit ist eingerichtet, den Behälter mittels der Aktuatoreinrichtung bei einer Transportbewegung des Behälters derart zu schwenken, dass ein schwappfreier Transport der Flüssigkeit erfolgt.

Die DE 10 2014 214696 A1 schägt eine Vorrichtung zum Transport eines Behältnisses relativ zu einer Füllstation vor, umfassend zumindest eine Füllstation zum Befüllen zumindest eines Behältnisses und zumindest eine Behältnisaufnahme zum Transport des Behältnisses relativ zur Füllstation. Es sind zumindest eine Antriebsfläche und zumindest ein auf der Antriebsfläche magnetisch ankoppelbarer Mover vorgesehen. Der Mover ist auf der Antriebsfläche in zumindest zwei Freiheitsgraden verschiebbar und/oder drehbar angeordnet. Die Behältnisaufnahme ist mit dem Mover verbunden.

Der Erfindung liegt die Aufgabe zu Grunde, eine alternative und/oder verbesserte Technik zum Transportieren eines Behälters zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Fördereinrichtung zum Transportieren eines Behälters für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Fördereinrichtung weist einen Grundkörper und eine Halterung (z. B. Behälter-Greifer, Klemmhalterung, Behälterklammer usw.) zum Halten des Behälters auf. Die Fördereinrichtung weist mindestens eine Schwenkantriebseinheit auf, die die Halterung (z. B. einachsig oder mehrachsig) schwenkbar mit dem Grundkörper verbindet. Die Fördereinrichtung weist mindestens einen Sensor (z. B. Beschleunigungssensor) auf, der zum Erfassen einer Beschleunigung, vorzugsweise einer Winkelbeschleunigung und/oder einer Linearbeschleunigung, der Fördereinrichtung ausgebildet ist. Die Fördereinrichtung weist eine Steuereinheit auf, die dazu ausgebildet ist, die mindestens eine Schwenkantriebseinheit zum Verschwenken der Halterung basierend auf einer Signalausgabe des mindestens einen Sensors zu betreiben, vorzugsweise zum Verhindern eines Überschwappens eines flüssigen Mediums im von der Halterung gehaltenen Behälter.

Die Fördereinrichtung ermöglicht ein Verschwenken des von der Halterung gehaltenen Behälters in Abhängigkeit von einer auf den Behälter bzw. die Fördereinrichtung wirkenden Beschleunigung. Die Berücksichtigung der jeweiligen Beschleunigung erlaubt eine exakte Verschwenkung der Halterung und des Behälters, um beispielsweise ein Überschwappen eines offenen Behälters bei hohen Beschleunigungen (z. B. schnelles Anfahren oder Notstoppen) oder in Kurven zu verhindern. Bewegungen des flüssigen Mediums in dem Behälter und Bewegungen der Behälter können nunmehr zuverlässig ausgeglichen werden. Über die Steuereinheit können der mindestens einen Schwenkantriebseinheit Sollwerte für die Verschwenkung der Halterung und damit des Behälters vorgegeben werden. Die Steuereinheit kann hierzu auch Istwerte mit den Sollwerten vergleichen und entsprechend Korrekturen vornehmen. Die Sollwerte können dabei je nach Einsatzgebiet gewählt werden. Eine Prüfung eines Behälters kann bspw. einen gegenüber der Prüfvorrichtung relativ unbewegten Behälter erfordern, wohingegen eine schnelle Kurvenfahrt einen zur Vertikalen und zur Horizontalen geneigten Behälter erfordern kann. Bei einem Notstopp kann die Massenträgheit des im Behälter befindlichen Produkts bei einer mehrachsigen Verschwenkbarkeit gegebenenfalls in mehreren Ebenen ausgeglichen werden, zum Beispiel wenn sich der Behälter gerade in einer Kurvenfahrt befindet.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Zweckmäßig kann die Schwenkantriebseinheit als eine Drehantriebseinheit oder als eine Schwenklagerung, die mittels Linearaktor(en) verstellbar ist, ausgeführt sein.

Beispielsweise kann die mindestens eine Schwenkantriebseinheit die Halterung mittelbar oder unmittelbar tragen und/oder mittelbar oder unmittelbar an dem Grundkörper getragen sein.

In einem Ausführungsbeispiel weist der mindestens eine Sensor einen 1D-, 2D- oder 3D-Winkelbeschleunigungssensor, vorzugsweise einen 1D-, 2D- oder 3D-Gyroskopsensor (z. B. 1D-, 2D- oder 3D-Drehratensensor), und/oder einen 1D-, 2D- oder 3D-Linearbeschleunigungssensor auf. Zweckmäßig kann die Anzahl und Konfiguration des mindestens einen Sensors an eine Anzahl und Konfiguration der mindestens einen Schwenkantriebseinheit angepasst sein. Wenn beispielsweise eine Schwenkantriebseinheit zum Verschwenken um eine Nickachse der Fördereinrichtung umfasst ist, kann zweckmäßig auch ein Winkelbeschleunigungssensor bezüglich der Nickachse und/oder ein Linearbeschleunigungssensor bezüglich der Längsachse (Rollachse) umfasst sein. Wenn zusätzlich oder alternativ eine Schwenkantriebseinheit zum Verschwenken um eine Rollachse der Fördereinrichtung umfasst ist, kann zweckmäßig auch ein Winkelbeschleunigungssensor bezüglich der Rollachse und/oder ein Linearbeschleunigungssensor bezüglich der Querachse (Nickachse) umfasst sein.

Zweckmäßig kann der mindestens eine Sensor in oder an dem Grundkörper, der Schwenkantriebseinheit oder der Halterung angeordnet sein.

In einem weiteren Ausführungsbeispiel verbindet die mindestens eine Schwenkantriebseinheit die Halterung mit dem Grundkörper schwenkbar um eine Nickachse (Querachse), eine Rollachse (Längsachse) und/oder eine Gierachse (Hochachse) der Fördereinrichtung. Die Verschwenkbarkeit um die Nickachse kann beispielsweise dazu genutzt werden, beim Anfahren, Beschleunigen, Verzögern und Stoppen der Fördereinrichtung ein Überschwappen eines flüssigen Mediums aus dem Behälter zu verhindern. Die Verschwenkbarkeit um die Rollachse kann beispielsweise dazu genutzt werden, das Überschwappen bei einer Kurvenfahrt zu verhindern.

In einem weiteren Ausführungsbeispiel ist die Steuereinheit dazu ausgebildet, die Halterung bei einem Anfahren, Beschleunigen, Bewegen, Verzögern, Stoppen und/oder Notstoppen der Fördereinrichtung mittels der mindestens einen Schwenkantriebseinheit um eine Nickachse der Fördereinrichtung zu verschwenken, vorzugsweise entgegen einer positiven oder negativen Beschleunigungsrichtung der Fördereinrichtung. Damit kann zweckmäßig ein Überschwappen eines flüssigen Mediums aus dem Behälter verhindert werden.

In einer Ausführungsform ist die Steuereinheit dazu ausgebildet, die Halterung bei einer Kurvenfahrt der Fördereinrichtung mittels der mindestens einen Schwenkantriebseinheit um eine Rollachse der Fördereinrichtung zu verschwenken. Zweckmäßig kann so ein Überschwappen eines flüssigen Mediums aus dem Behälter verhindert und/oder eine größere Transportgeschwindigkeit ermöglicht werden.

In einer weiteren Ausführungsform ist die Steuereinheit dazu ausgebildet, die mindestens eine Schwenkantriebseinheit zum Verschwenken der Halterung ferner basierend auf einer Geschwindigkeit der Fördereinrichtung, einer Masse des von der Halterung gehaltenen Behälters, einer Füllhöhe des von der Halterung gehaltenen Behälters und/oder von Umgebungsbedingungen (z. B. bauliche Gegebenheit, wie Engstellen usw.) zu betreiben.

In einer Ausführungsvariante ist die Steuereinheit dazu ausgebildet, die Halterung mittels der mindestens einen Schwenkantriebseinheit so zu verschwenken, dass bei einer Bewegung der Fördereinrichtung die Halterung parallel zu einer Oberfläche eines flüssigen Mediums in dem von der Halterung getragenen Behälter ist.

In einer weiteren Ausführungsvariante ist die Steuereinheit dazu ausgebildet, die Halterung mittels der mindestens einen Schwenkantriebseinheit so zu verschwenken, dass bei einer Bewegung der Fördereinrichtung eine Oberfläche eines flüssigen Mediums in dem von der Halterung getragenen Behälter rechtwinklig zu einer resultierenden Kraft aus einer Erdanziehungskraft und einer Zentripetalkraft bezüglich des Behälters ist.

In einer weiteren Ausführungsvariante ist die Steuereinheit dazu ausgebildet, die Halterung mittels der mindestens einen Schwenkantriebseinheit so zu verschwenken, dass bei einer Bewegung der Fördereinrichtung eine Hochachse des von der Halterung getragenen Behälters parallel zu einer resultierenden Kraft aus einer Erdanziehungskraft und einer Zentripetalkraft bezüglich des Behälters ist.

In einem Ausführungsbeispiel ist die Steuereinheit dazu ausgebildet, basierend auf einer Leistungsaufnahme der mindestens einen Schwenkantriebseinheit eine Gewichtskraft des von der Halterung getragenen Behälters zu bestimmen. Damit kann die Schwenkantriebseinheit nicht nur zum Verschwenken des Behälters verwendet werden, sondern auch zum Wiegen des Behälters.

Erfindungsgemäß ist die Steuereinheit dazu ausgebildet, die mindestens eine Schwenkantriebseinheit und/oder den mindestens einen Sensor zum Energiesparen nur abschnittsweise zu aktivieren und/oder außerhalb von vorbestimmten Abschnitten zu deaktivieren. So kann elektrische Energie eingespart und/oder eine Lebensdauer der Komponenten erhöht werden.

In einer Ausführungsform weist die mindestens eine Schwenkantriebseinheit mehrere, vorzugsweise genau zwei oder genau drei, Schwenkantriebseinheiten auf, die zweckmäßig in Reihe zwischen dem Grundkörper und der Halterung angeordnet sind. Vorzugsweise kann eine Schwenkantriebseinheit zum Verschwenken um die Nickachse und eine Schwenkantriebseinheit zum Verschwenken um die Rollachse umfasst sein.

In einer weiteren Ausführungsform ist die Fördereinrichtung als ein Abschnitt eines drehbaren Transportsterns zum Transportieren von Behältern ausgebildet. Alternativ kann die (z. B. individuell antreibbare) Fördereinrichtung beispielsweise auch mindestens einen Magneten zum zweckmäßig individuellen Antreiben der Fördereinrichtung entlang eines Führungselements (z. B. Führungsschiene, Führungsnut, Führungsbahn) vorzugsweise mittels eines Langstators eines Langstator-Linearmotorsystems aufweisen. Die hierin offenbarten Techniken können folglich in unterschiedlichsten Anwendungsfällen eingesetzt werden.

In einer Ausführungsvariante weist die Fördereinrichtung einen, vorzugsweise wechselbaren und/oder wiederaufladbaren, elektrischen Energiespeicher zur Versorgung der mindestens einen Schwenkantriebseinheit, der Steuereinheit und/oder des mindestens einen Sensors auf.

Die Erfindung betrifft auch eine Behälterbehandlungsanlage. Die Behälterbehandlungsanlage weist eine Behälterbehandlungsvorrichtung, vorzugweise eine Druckvorrichtung zum Bedrucken von Behältern, eine (zum Beispiel kameragestützte) Prüfvorrichtung zum Prüfen von Behältern (zum Beispiel auf Einschlüsse oder Verunreinigungen) oder eine Wiegevorrichtung zum Wiegen von Behältern, auf. Die Behälterbehandlungsanlage weist zudem mindestens eine Fördereinrichtung wie hierin offenbart auf, die zum Passieren der Behälterbehandlungsvorrichtung angeordnet ist. Die Steuereinheit ist dazu ausgebildet, die mindestens eine Schwenkantriebseinheit so zu betreiben, dass die Halterung beim Passieren der Behälterbehandlungsvorrichtung eine vorbestimmte Orientierung einnimmt und/oder eine vorbestimmte Bewegung vollführt. Dadurch kann eine Qualität der Behandlung durch die Behälterbehandlungsanlage verbessert und/oder eine Zeitdauer der Behandlung durch die Behälterbehandlungsanlage verringert werden. Die vorbestimmte Orientierung und/oder die vorbestimmte Bewegung kann zweckmäßig an die Behandlung durch die Behälterbehandlungsvorrichtung angepasst sein. Zum Beispiel kann eine vorbestimmte Bewegung der Halterung ausgeführt werden, sodass sich ein relativer Stillstand des durch die Halterung gehaltenen Behälters bezüglich der Prüfvorrichtung ergibt, obwohl sich die Fördereinrichtung tatsächlich relativ zu der Prüfvorrichtung bewegt. Es ist möglich, dass in dieser Ausführungsform die Fördereinrichtung keine Sensoren zum Erfassen der Beschleunigung aufweist und/oder die Steuereinheit nicht zum Verschwenken basierend auf einer Signalausgabe der Sensoren ausgebildet ist, sondern stattdessen zweckmäßig basierend auf einer Position der Fördereinrichtung bezüglich der Behälterbehandlungsvorrichtung.

Die Erfindung betrifft auch eine weitere Behälterbehandlungsanlage. Die Behälterbehandlungsanlage weist eine Füllvorrichtung zum Befüllen von Behältern und/oder eine Verschließvorrichtung zum Verschließen von Behältern auf. Die Behälterbehandlungsanlage weist mindestens eine Fördereinrichtung wie hierin offenbart auf, die bezüglich eines Behälterstroms stromabwärts der Füllvorrichtung und/oder stromaufwärts der Verschließvorrichtung angeordnet ist. Damit kann ein Überschwappen eines gefüllten und unverschlossenen Behälters zum beispielsweise beim schnellen Anfahren, beim Notstoppen oder bei einer Kurvenfahrt verhindert werden.

Die Erfindung betrifft auch ein Verfahren zum Transportieren eines Behälters mittels der Fördereinrichtung wie hierin offenbart oder in einer Behälterbehandlungsanlage wie hierin offenbart. Das Verfahren weist ein Erfassen einer Beschleunigung, vorzugsweise einer Winkelbeschleunigung und/oder einer Linearbeschleunigung, einer Fördereinrichtung mit einer Halterung, die den Behälter hält, auf. Das Verfahren weist ein Verschwenken der Halterung in Abhängigkeit von der erfassten Beschleunigung, vorzugsweise zum Verhindern eines Überschwappens eines flüssigen Mediums in dem Behälter, auf, zweckmäßig mittels mindestens einer Schwenkantriebseinheit. Das Verfahren ermöglicht die Erzielung der gleichen Vorteile wie hierin bereits für die Fördereinrichtung beschrieben ist.

In einem Ausführungsbeispiel wird die Halterung um eine Nickachse, eine Gierachse und/oder eine Rollachse der Fördereinrichtung verschwenkt, und/oder die Halterung wird bei einem Anfahren, Beschleunigen, Bewegen, Verzögern, Stoppen, Notstoppen und/oder einer Kurvenfahrt der Fördereinrichtung verschwenkt, vorzugsweise wenn der Behälter gefüllt und offen ist. In einem weiteren Ausführungsbeispiel wird die Halterung bei einer Bewegung der Fördereinrichtung so verschwenkt, dass die Halterung parallel zu einer Oberfläche eines flüssigen Mediums in dem von der Halterung getragenen Behälter ist, und/oder eine Oberfläche eines flüssigen Mediums in dem von der Halterung getragenen Behälter rechtwinklig zu einer resultierenden Kraft aus einer Erdanziehungskraft und einer Zentripetalkraft bezüglich des Behälters ist, und/oder eine Hochachse des von der Halterung getragenen Behälters parallel zu einer resultierenden Kraft aus einer Erdanziehungskraft und einer Zentripetalkraft bezüglich des Behälters ist.

In einer Ausführungsform weist die Vorrichtung ein Verschwenken der Halterung in eine vorbestimmte Orientierung und/oder in einer vorbestimmten Bewegung, wenn die Fördereinrichtung eine Behälterbehandlungsvorrichtung, vorzugsweise eine Druckvorrichtung zum Bedrucken des Behälters, eine Prüfvorrichtung zum Prüfen des Behälters oder eine Wiegevorrichtung zum Wiegen des Behälters, passiert, auf. Wie bereits erläutert, kann damit eine Qualität der Behandlung verbessert und/oder eine Behandlungsdurchlaufzeit verringert werden.

In einer weiteren Ausführungsform weist das Verfahren ein Bestimmen (zum Beispiel Berechnen oder Schätzen) einer Gewichtskraft des Behälters basierend auf einer Leistungsaufnahme mindestens einer Schwenkantriebseinheit zum Verschwenken der Halterung auf.

Es ist möglich, dass die Fördereinrichtung ohne Sensoren zum Erfassen der Beschleunigung ausgestattet ist und/oder die Steuereinheit nicht zum Verschwenken basierend auf einer Signalausgabe der Sensoren ausgebildet ist. Zweckmäßig könnte das Verschwenken bspw. an einer vorbestimmten Position oder bei Eintritt einer vorbestimmten Bedingung (Anfahren, Beschleunigen, Verzögern, Stoppen, Notstoppen usw. der Fördereinrichtung) bewirkt werden.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht eines Ausschnitts aus einer Vorrichtung zum Transportieren von Behältern mit einer Fördereinrichtung gemäß einem Ausführungsbeispiel der vorliegenden Offenbarung;
- Figur 2: eine perspektivische Ansicht der beispielhaften Fördereinrichtung von Figur 1;
- Figur 3: eine schematische Draufsicht auf eine Behälterbehandlungsanlage gemäß einem Ausführungsbeispiel der vorliegenden Offenbarung; und
- Figur 4: eine schematische Draufsicht auf eine weitere Behälterbehandlungsanlage gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

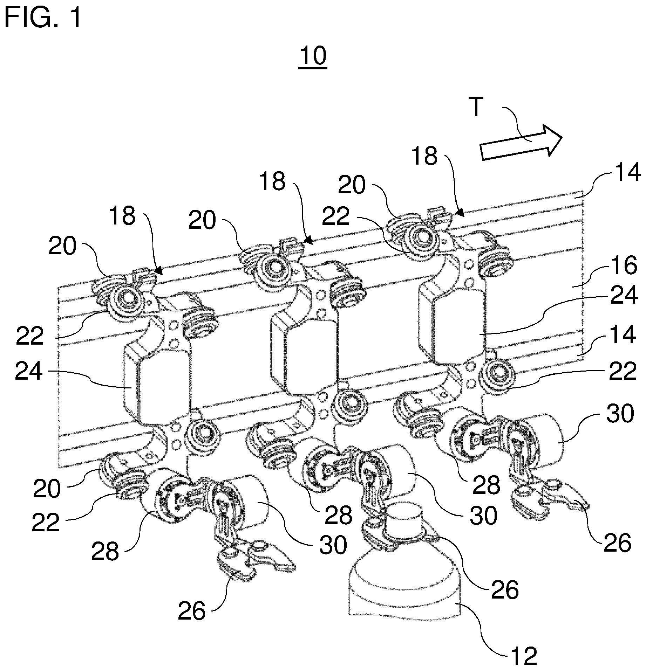

Figur 1 zeigt einen Ausschnitt einer Vorrichtung 10 zum Transportieren von Behältern 12 (zum Beispiel Flaschen), vorzugsweise in einer Behälterbehandlungsanlage, z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel.

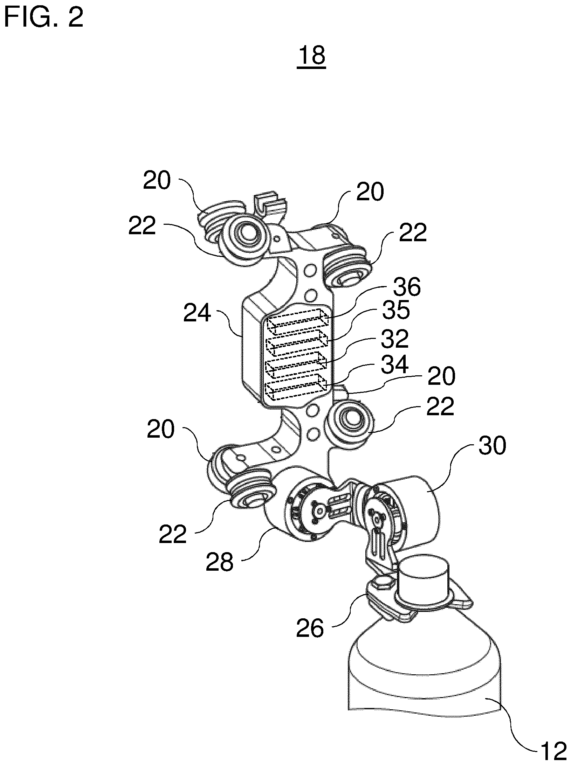

Die Vorrichtung 10 weist Führungselemente 14, einen Langstator 16 und Fördereinrichtungen 18 auf. Eine einzelne Fördereinrichtung 18 ist nochmals in Figur 2 in größerem Detail dargestellt.

Die Fördereinrichtungen 18 sind entlang der beiden Führungselemente 14 geführt. Die Führungselemente 14 können sich entlang einer Geraden oder einer Bahnkurve erstrecken. Die Führungselemente 14 erstrecken sich parallel zueinander. Die Führungselemente 14 können als Führungsschienen ausgeführt sein, wie dargestellt ist. Alternativ können die Führungselemente 14 beispielsweise auch als Führungsnuten oder Führungsbahnen ausgeführt sein. Es ist auch möglich, dass mehr oder weniger als zwei Führungselemente 14 zum Führen der Fördereinrichtungen 18 vorhanden sind.

Der Langstator 16 erstreckt sich parallel zu den Führungselementen 14. Der Langstator 16 kann beispielsweise aus mehreren nebeneinander angeordneten Langstatorsegmenten gebildet sein. Die Langstatorsegmente können in magnetische Wechselwirkung mit Magneten 36 (z. B. Elektromagneten und/oder Permanentmagneten (siehe Figur 2)) der Fördereinrichtungen 18 zum Fortbewegen der Fördereinrichtungen 18 treten. Der Langstator 16 und die Fördereinrichtungen 18 bilden somit ein sogenanntes Langstator-Linearmotorsystem. Die Fördereinrichtungen 18 können individuell von dem Langstator 16 entlang der Führungselemente 14 in einer Transportrichtung T (siehe Pfeil in Figur 1) bewegt werden.

Auch wenn der Antrieb mittels Langstator-Linearmotortechnik bevorzugt ist, wurde erkannt, dass die hierin offenbarten Techniken auch bei anderen Antriebskonzepten eingesetzt werden können. Es ist somit beispielsweise auch möglich, die Fördereinrichtungen 18 mittels einer anderen Antriebstechnik individuell oder gemeinsam anzutreiben bzw. fortzubewegen. Zum Beispiel kann jede der Fördereinrichtungen 18 eine eigene elektrische Antriebseinheit aufweisen, mit der beispielsweise Räder oder Rollen der Fördereinrichtungen 18 antreibbar sind. Als weiteres Beispiel können die Fördereinrichtungen 18 auch als Abschnitte eines drehbaren Transportsterns, der die Fördereinrichtungen 18 gemeinsam dreht, ausgeführt sein.

Im dargestellten Ausführungsbeispiel von Figur 1 und 2 weisen die Fördereinrichtungen 18 mehrere Kontaktelemente 20, 22, einen Grundkörper 24, eine Halterung 26, eine erste Schwenkantriebseinheit 28 und eine zweite Schwenkantriebseinheit 30 auf. Die Fördereinrichtungen 18 weisen zusätzlich eine Steuereinheit 32 und mindestens einen Sensor 34 auf (siehe Figur 2). Die Fördereinrichtungen 18 können zusätzlichen einen elektrischen Energiespeicher 35 aufweisen (siehe Figur 2).

Die Fördereinrichtungen 18 sind mittels der mehrerer Kontaktelemente 20 entlang der Führungselemente 14 geführt. Die Fördereinrichtungen 18 können weitere Kontaktelemente 22 aufweisen. Mittels der weiteren Kontaktelemente 22 können die Fördereinrichtungen 18 beispielsweise in einem Weichenabschnitt der Vorrichtung 10 auf andere Förderelemente (nicht dargestellt) wechseln. Die Kontaktelemente 20, 22 können an dem Grundkörper 24 gelagert sein. Wie dargestellt ist, können die Kontaktelemente 20, 22 als drehbare Rollen zum Abrollen auf den Führungselementen 14 ausgeführt sein. Es ist allerdings auch möglich, dass die Kontaktelemente 20, 22 anders ausgeführt sind, zum Beispiel als Gleitschuhe bzw. Gleitkufen. Je nach Anzahl der Führungselemente 14 und abhängig von einer Konfiguration der Führungselemente 14 können die Fördereinrichtungen 18 auch mehr oder weniger Kontaktelemente 20, 22 aufweisen. Aus Übersichtsgründen sind in der Figur 1 nicht alle Kontaktelemente 20, 22 mit einem Bezugszeichen versehen.

In Figur 2 ist schematisch dargestellt, dass der Grundkörper 24 die Steuereinheit 32 und den mindestens einen Sensor 34 aufweist. Ferner kann der Grundkörper 24 beispielsweise die Magnete 36 zur magnetischen Wechselwirkung mit dem Langstator 16 zum Antreiben der Fördereinrichtungen 18 aufweisen.

Die Halterung 26 der Fördereinrichtungen 18 dient zum Halten von Behältern 12. Die Halterung 26 ist als eine Behälterhals-Halterung zum Halten des Behälters 12 an dessen Behälterhals ausgeführt ("neck-handling"). Beispielsweise kann der Behälterhals in der Halterung 26 mittels einer Klemmhalterung, z. B. einer Klammer, geklemmt sein. Es ist allerdings auch möglich, dass die die Halterung 26 anders ausgeführt ist, zum Beispiel als eine Greifer-Halterung oder eine Saug-Halterung.

Die Schwenkantriebseinheiten 28, 30 verbinden die Halterung 26 schwenkbar mit dem Grundkörper 24. Die Schwenkantriebseinheiten 28, 30 sind in Reihe zwischen dem Grundkörper 24 und der Halterung 26 angeordnet. Die erste Schwenkantriebseinheit 28 verbindet den Grundkörper 24 schwenkbar mit der zweiten Schwenkantriebseinheit 30. Die zweite Schwenkantriebseinheit 30 verbindet die erste Schwenkantriebseinheit 28 schwenkbar mit der Halterung 26. Die erste Schwenkantriebseinheit 28 ist um eine Nickachse oder Querachse der Fördereinrichtung 18 schwenkbar. Die zweite Schwenkantriebseinheit 30 ist um eine Rollachse oder Längsachse der Fördereinrichtung 18 schwenkbar. Wie dargestellt ist, können die Schwenkantriebseinheiten 28, 30 als Drehantriebseinheiten oder Schwenkmotoren ausgeführt sein. Andere Ausführungen sind ebenfalls möglich, z. B. in Form von Schwenklagerungen mit Linearaktor(en). Es ist auch möglich, dass mindestens eine zusätzliche und/oder alternative Schwenkantriebseinheit (nicht dargestellt) zwischen dem Grundkörper 24 und der Halterung 26 angeordnet ist. Die zusätzliche Schwenkantriebseinheit kann beispielsweise ein Verschwenken der Halterung 26 um eine Gierachse oder Hochachse der Fördereinrichtung 18 ermöglichen. Es ist auch möglich, dass nur eine einzige der Schwenkantriebseinheiten vorhanden ist, um die Halterung 26 um die Nickachse, die Rollachse oder die Gierachse zu verschwenken.

Die Steuereinheit 32 steht in Kommunikationsverbindung mit dem mindestens einen Sensor 34 und den Schwenkantriebseinheiten 28, 30. Die Steuereinheit 32 kann ferner bspw. drahtlos in Kommunikationsverbindung mit einer Zentralsteuereinheit (nicht dargestellt) der Vorrichtung 10 oder der gesamten Behälterbehandlungsanlage stehen. Die Steuereinheit 32 ist dazu ausgebildet, die Schwenkantriebseinheiten 28, 30 zu betreiben (z. B. zu steuern und/oder zu regeln). Zweckmäßig kann die Steuereinheit 32 die Schwenkantriebseinheiten 28, 30 basierend auf einem Signalempfang von dem mindestens einen Sensor 34 und/oder von der Zentralsteuereinheit betreiben. Bspw. kann die Steuereinheit 32 ein Sollwert für die Ausrichtung der Halterung 26 bzw. des Behälters 12 gegenüber einer Referenzebene (z. B. Horizontalebene) vorgeben und durch Ansteuerung der Schwenkantriebseinheiten 28, 30 einen jeweiligen Ist-Wert an den Sollwert anpassen.

Der mindestens eine Sensor 34 kann einen oder mehrere Sensoren aufweisen, die dazu ausgebildet sind, eine Beschleunigung der Fördereinrichtung 18 zu erfassen. Der mindestens eine Sensor 34 kann in Form von Hardware und/oder in Form von Software ausgeführt sein.

Der mindestens eine Sensor 34 kann einen oder mehrere Winkelbeschleunigungssensoren, insbesondere Gyroskopsensoren, aufweisen. Mittels der Winkelbeschleunigungssensoren kann eine auf die Fördereinrichtung 18 bzw. die Halterung 26 und den Behälter 12 wirkende Winkelbeschleunigung um die Nickachse, die Rollachse und/oder die Gierachse der Fördereinrichtung 18 erfasst werden. Der Sensor 34 kann somit zweckmäßig einen 1D-Winkelbeschleunigungssensor (für die Nickachse oder die Rollachse oder die Gierachse), einen 2D-Winkelbeschleunigungssensor (für jeweils zwei von der Nickachse, der Rollachse und der Gierachse) oder einen 3D-Winkelbeschleunigungssensor (für die Nickachse, die Rollachse und die Gierachse) aufweisen. Beispielsweise kann die Auswahl der Winkelbeschleunigungssensoren an die Konfiguration der Schwenkantriebseinheiten angepasst sein. D.h., sofern die Fördereinrichtung 18 eine Schwenkantriebseinheit (z. B. 28, 30) zum Verschwenken der Halterung 26 um die Nickachse, die Rollachse bzw. die Gierachse aufweist, kann die Fördereinrichtung 18 zweckmäßig auch einen Winkelbeschleunigungssensoren zum Erfassen einer Winkelbeschleunigung um die Nickachse, die Rollachse bzw. die Gierachse aufweisen. Bevorzugt kann zumindest ein Winkelbeschleunigungssensor für die Nickachse und/oder ein Winkelbeschleunigungssensor für die Rollachse vorhanden sein.

Der mindestens eine Sensor 34 kann alterativ oder zusätzlich einen oder mehrere Linearbeschleunigungssensoren aufweisen. Mittels der Linearbeschleunigungssensoren kann eine auf die Fördereinrichtung 18 bzw. die Halterung 26 und den Behälter 12 wirkende Linearbeschleunigung entlang der Nickachse, der Rollachse und/oder der Gierachse der Fördereinrichtung 18 erfasst werden. Der Sensor 34 kann somit zweckmäßig einen 1D-Linearbeschleunigungssensor (für die Nickachse oder die Rollachse oder die Gierachse), einen 2D-Linearbeschleunigungssensor (für jeweils zwei von der Nickachse, der Rollachse und der Gierachse) oder einen 3D-Linearbeschleunigungssensor (für die Nickachse, die Rollachse und die Gierachse) aufweisen. Bevorzugt kann zumindest ein Linearbeschleunigungssensor für die Nickachse und/oder ein Linearbeschleunigungssensor für die Rollachse vorhanden sein.

Die Steuereinheit 32, der mindestens eine Sensor 34 und/oder die Schwenkantriebseinheiten 28, 30 können mit elektrischer Energie durch den elektrischen Energiespeicher 35 versorgt werden. Der elektrische Energiespeicher 35 kann wiederaufladbar und/oder (schnell-)wechselbar ausgeführt sein. Der elektrische Energiespeicher 35 kann beispielsweise als Akkumulator ausgeführt sein. Es ist möglich, dass zusätzlich oder alternativ zu dem elektrischen Energiespeicher 35 eine andere elektrische Energieversorgung für die Steuereinheit 32, den mindestens einen Sensor 34 und/oder die Schwenkantriebseinheiten 28, 30 vorgesehen ist. Beispielsweise kann eine elektrische Energieversorgung auch induktiv oder kabelgebunden von extern erfolgen.

Die Steuereinheit 32 aktiviert den mindestens einen Sensor 34 und/oder die mindestens eine Schwenkantriebseinheit 28, 30 nur in vorbestimmten Abschnitten der Vorrichtung 10. In den übrigen Abschnitten der Vorrichtung 10 können die Sensoren 34 und/oder Schwenkantriebseinheiten 28, 30 hingegen deaktiviert sein, um elektrische Energie zu sparen. Zweckmäßig können die Sensoren 34 und die Schwenkantriebseinheit 28, 30 somit nur in vorbestimmten Abschnitten aktiviert sein, in denen ein Verschwenken von Behältern notwendig oder gewünscht ist.

Es ist auch möglich, dass mittels Erfassung und Auswertung der Leistungsaufnahme der Schwenkantriebseinheit 28, 30 Rückschlüsse bezüglich einer Gewichtskraft des Behälters 12, der von der Halterung 26 gehalten ist, gezogen werden können. So kann bspw. eine der Schwenkantriebseinheiten 28, 30 auch dazu verwendet werden, eine Masse des Behälters 12 zu bestimmen, zum Beispiel nach dem Befüllen durch eine Füllvorrichtung. Dies ermöglicht eine Überprüfung dahingehend, ob eine korrekte Füllmenge in den Behälter 12 eingefüllt wurde.

Die angetriebene Verschwenkbarkeit der Halterung 26 und des Behälters 12 kann auf unterschiedliche Weise vorteilhaft genutzt werden. Beispielsweise kann die Technik beim Transportieren von mit einem flüssigen Medium gefüllten und unverschlossenen Behältern 12 verwendet werden. Die Technik kann ein Überschwappen der Behälter 12 aufgrund der Massenträgheit des flüssigen Mediums in unterschiedlichen Situationen (zum Beispiel Anfahren, Beschleunigen, Verzögern, Stoppen, Notstoppen, Kurvenfahrt usw.) verhindern oder zumindest reduzieren. Es ist auch möglich, die Technik so zu verwenden, dass der Behälter 12 beim Passieren einer Behälterbehandlungsvorrichtung durch die Schwenkantriebseinheiten 28, 30 vorbestimmt orientiert und/oder vorbestimmt bewegt wird. Damit kann beispielsweise eine Qualität der Behandlung durch die Behälterbehandlungsvorrichtung verbessert und/oder eine Durchlaufzeit der Behandlung durch die Behälterbehandlungsvorrichtung verringert werden. Es versteht sich, dass bei einer derartigen Verwendung die Fördereinrichtung nicht zwingend einen Sensor zum Erfassen einer Beschleunigung aufweisen muss. Selbstverständlich sind weitere Anwendungsmöglichkeiten denkbar.

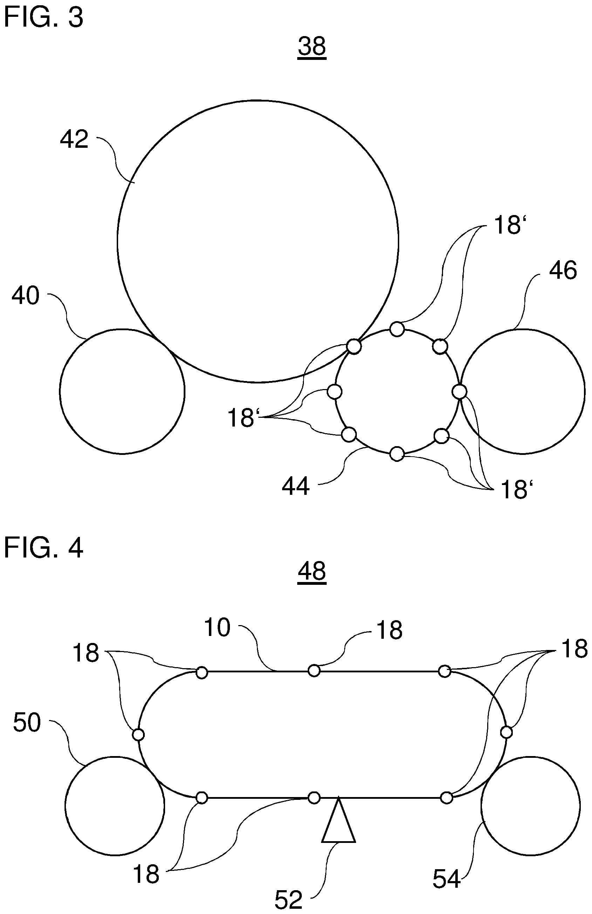

Figur 3 zeigt eine mögliche Anwendung der hierin offenbarten Technik.

Figur 3 zeigt eine Behälterbehandlungsanlage 38. Die Behälterbehandlungsanlage 38 weist einen drehbaren Transportstern 40, eine Füllvorrichtung 42 (zum Beispiel ein drehbares Füllerkarussell), einen drehbaren Transportstern 44 und eine Verschließvorrichtung 46 auf. Der Transportstern 40 dient als Einlaufstern für die Füllvorrichtung 42. Der Transportstern 40 übergibt leere Behälter in die Füllvorrichtung 42. In der Füllvorrichtung 42 werden die leeren Behälter mit einem flüssigen Medium, zum Beispiel einem Getränk, befüllt. Die Füllvorrichtung 42 übergibt die befüllten Behälter an den Transportstern 44. Der Transportstern 44 dient als Auslaufstern für die Füllvorrichtung 42. Der Transportstern 44 transportiert die befüllten Behälter zu der Verschließvorrichtung 46. Die Verschließvorrichtung 46 verschließt die gefüllten Behälter, zum Beispiel mittels eines Kronkorkens oder eines Schraubdeckels.

Der Transportstern 44 transportiert die gefüllten Behälter in einem unverschlossenen Zustand, das heißt ohne Deckel. Um ein Überschwappen der gefüllten Behälter zu verhindern, kann der Transportstern 44 eine Vielzahl von Fördereinrichtungen 18' aufweisen. Die Fördereinrichtungen 18' sind nicht individuell bewegbar, wie im Ausführungsbeispiel von Figur 1 und 2. Stattdessen bilden die Fördereinrichtungen 18' jeweils Abschnitte des drehbaren Transportsterns 44. Die Fördereinrichtungen 18' sind gemeinsam um eine Drehachse des Transportsterns 44 bewegbar. Während des Transports durch den Transportstern 44 können die gefüllten Behälter durch die Fördereinrichtungen 18' z. B. in einer Radialrichtung nach außen verschwenkt werden, um ein Überschwappen zu verhindern. Das Verschwenken kann auch ermöglichen, dass beispielsweise mit einer höheren Geschwindigkeit transportiert werden kann.

Es ist beispielsweise auch möglich, dass der Transport von der Füllvorrichtung 42 zu der Verschließvorrichtung 46 statt mittels des drehbaren Transportsterns 44 mit einer Vorrichtung 10 gemäß der Figur 1 ausgeführt wird, d. h. mittels individuell bewegbarer Fördereinrichtungen 18.

Figur 4 zeigt eine weitere mögliche Anwendung der hierin offenbarten Technik.

Figur 4 zeigt eine Behälterbehandlungsanlage 48. Die Behälterbehandlungsanlage 48 weist einen drehbaren Transportstern 50, die Vorrichtung 10, eine Behälterbehandlungsvorrichtung 52 und einen drehbaren Transportstern 54 auf. Der Transportstern 50 transportiert Behälter zu der Vorrichtung 10. Die Vorrichtung 10 übernimmt die Behälter von dem Transportstern 50 mittels der mehreren Fördereinrichtungen 18. Die Vorrichtung 10 übergibt die Behälter nach Behandlung durch die Behälterbehandlungsvorrichtung 52 dem Transportstern 54.

Die Fördereinrichtungen 18 passieren die Behälterbehandlungsvorrichtung 52. Dabei werden die Behälter von der Behälterbehandlungsvorrichtung 52 entsprechend der jeweiligen Funktion der Behälterbehandlungsvorrichtung 52 behandelt. Die Behandlung kann bspw. während einer Bewegung der jeweiligen Fördereinrichtung 18 oder im Stillstand der Fördereinrichtung 18 erfolgen. Die Behälterbehandlungsvorrichtung 52 kann beispielsweise eine Druckvorrichtung zum Bedrucken von Behältern, eine Prüfvorrichtung zum Prüfen von Behältern, eine Wiegevorrichtung zum Wiegen von Behältern oder eine andere Behälterbehandlungsvorrichtung (z. B. zum Reinigen, Prüfen, Abfüllen, Verschließen, Etikettieren, Bedrucken und/oder Verpacken von Behältern) sein.

Um eine Qualität der Behandlung und/oder einen Durchsatz zu erhöhen, können die Behälter beim Passieren der Behälterbehandlungsvorrichtung 52 durch die mindestens eine Schwenkantriebseinheit 28, 30 (siehe Figuren 1 und 2) in eine vorbestimmte Orientierung geschwenkt werden und/oder eine vorbestimmte Bewegung ausführen. Zweckmäßig kann auch ohne einen kompletten Stillstand der Fördereinrichtung 18 ein verbessertes Behandlungsergebnis erzielt werden. Außerdem kann eine schwingende Flasche schneller eine ruhende Stellung einnehmen, so dass ein Behandlungsschritt durch die Behälterbehandlungsvorrichtung 52 schneller erfolgen kann. Es ist auch möglich, dass eine Behältermündung in Richtung eines Behandlungselements der Behälterbehandlungsvorrichtung 52 geneigt bzw. geschwenkt wird, bevor die Fördereinrichtung 18 eine Behandlungsposition für die Behandlung durch die Behälterbehandlungsvorrichtung 52 eingenommen hat (Behandlungszeitgewinn). Die Massenträgheit des Behälters bzw. des flüssigen Mediums in dem Behälter kann ausgeglichen werden. Es ist bspw. auch ein schnelleres Anfahren der Fördereinrichtung 18 nach dem Behandeln möglich, insbesondere bei gerade gefüllten und noch geöffneten Behältern.

### Bezugszeichenliste

- 10: Vorrichtung zum Transportieren von Behältern
- 12: Behälter
- 14: Führungselement
- 16: Langstator
- 18: Fördereinrichtung
- 20: Kontaktelement
- 22: Kontaktelement
- 24: Grundkörper
- 26: Halterung
- 28: Erste Schwenkantriebseinheit
- 30: Zweite Schwenkantriebseinheit
- 32: Steuereinheit
- 34: Sensor
- 35: Energiespeicher
- 36: Magnet
- 38: Behälterbehandlungsanlage
- 40: Transportstern
- 42: Füllvorrichtung
- 44: Transportstern
- 46: Verschließvorrichtung
- 48: Behälterbehandlungsanlage
- 50: Transportstern
- 52: Behälterbehandlungsvorrichtung
- 54: Transportstern
- T: Transportrichtung

## Patentansprüche

1. Fördereinrichtung (18) zum Transportieren eines Behälters (12) für eine Behälterbehandlungsanlage (38, 48), aufweisend:
einen Grundkörper (24);
eine Halterung (26) zum Halten des Behälters (12);
mindestens eine Schwenkantriebseinheit (28, 30), die die Halterung (26) schwenkbar mit dem Grundkörper (24) verbindet;
mindestens einen Sensor (34), der zum Erfassen einer Beschleunigung, vorzugsweise einer Winkelbeschleunigung und/oder einer Linearbeschleunigung, der Fördereinrichtung (18) ausgebildet ist; und
eine Steuereinheit (32), die dazu ausgebildet ist, die mindestens eine Schwenkantriebseinheit (28, 30) zum Verschwenken der Halterung (26) basierend auf einer Signalausgabe des mindestens einen Sensors (34) zu betreiben, vorzugsweise zum Verhindern eines Überschwappens eines flüssigen Mediums im von der Halterung (26) gehaltenen Behälter (12),
**dadurch gekennzeichnet, dass** die Steuereinheit (32) dazu ausgebildet ist, die mindestens eine Schwenkantriebseinheit (28, 30) und/oder den mindestens einen Sensor (34) zum Energiesparen nur abschnittsweise zu aktivieren und/oder außerhalb von vorbestimmten Abschnitten zu deaktivieren.

2. Fördereinrichtung (18) nach Anspruch 1, wobei:
der mindestens eine Sensor (34) einen 1D-, 2D- oder 3D-Winkelbeschleunigungssensor, vorzugsweise einen 1D-, 2D- oder 3D-Gyroskopsensor, aufweist; und/oder
der mindestens eine Sensor (34) einen 1D-, 2D- oder 3D-Linearbeschleunigungssensor aufweist.

3. Fördereinrichtung (18) nach Anspruch 1 oder Anspruch 2, wobei:
die mindestens eine Schwenkantriebseinheit (28, 30) die Halterung (26) um eine Nickachse, eine Rollachse und/oder eine Gierachse der Fördereinrichtung (18) schwenkbar mit dem Grundkörper (24) verbindet.

4. Fördereinrichtung (18) nach einem der vorherigen Ansprüche, wobei die Steuereinheit (32) dazu ausgebildet ist:
die Halterung (26) bei einem Anfahren, Beschleunigen, Bewegen, Verzögern, Stoppen und/oder Notstoppen der Fördereinrichtung (18) mittels der mindestens einen Schwenkantriebseinheit (28, 30) um eine Nickachse der Fördereinrichtung (18) zu verschwenken, vorzugsweise entgegen einer positiven oder negativen Beschleunigungsrichtung der Fördereinrichtung (18); und/oder
die Halterung (26) bei einer Kurvenfahrt der Fördereinrichtung (18) mittels der mindestens einen Schwenkantriebseinheit (28, 30) um eine Rollachse der Fördereinrichtung (18) zu verschwenken; und/oder
die mindestens eine Schwenkantriebseinheit (28, 30) zum Verschwenken der Halterung (26) ferner basierend auf einer Geschwindigkeit der Fördereinrichtung (18), einer Masse des von der Halterung (26) gehaltenen Behälters (12), einer Füllhöhe des von der Halterung (26) gehaltenen Behälters (12) und/oder von Umgebungsbedingungen zu betreiben.

5. Fördereinrichtung (18) nach einem der vorherigen Ansprüche, wobei die Steuereinheit (32) dazu ausgebildet ist:
die Halterung (26) mittels der mindestens einen Schwenkantriebseinheit (28, 30) so zu verschwenken, dass bei einer Bewegung der Fördereinrichtung (18) die Halterung (26) parallel zu einer Oberfläche eines flüssigen Mediums in dem von der Halterung (26) getragenen Behälter (12) ist; und/oder
die Halterung (26) mittels der mindestens einen Schwenkantriebseinheit (28, 30) so zu verschwenken, dass bei einer Bewegung der Fördereinrichtung (18) eine Oberfläche eines flüssigen Mediums in dem von der Halterung (26) getragenen Behälter (12) rechtwinklig zu einer resultierenden Kraft aus einer Erdanziehungskraft und einer Zentripetalkraft bezüglich des Behälters (12) ist; und/oder
die Halterung (26) mittels der mindestens einen Schwenkantriebseinheit (28, 30) so zu verschwenken, dass bei einer Bewegung der Fördereinrichtung (18) eine Hochachse des von der Halterung (26) getragenen Behälters (12) parallel zu einer resultierenden Kraft aus einer Erdanziehungskraft und einer Zentripetalkraft bezüglich des Behälters (12) ist.

6. Fördereinrichtung (18) nach einem der vorherigen Ansprüche, wobei die Steuereinheit (32) dazu ausgebildet ist,
basierend auf einer Leistungsaufnahme der mindestens einen Schwenkantriebseinheit (28, 30) eine Gewichtskraft des von der Halterung (26) getragenen Behälters (12) zu bestimmen.

7. Fördereinrichtung (18) nach einem der vorherigen Ansprüche, wobei:
die mindestens eine Schwenkantriebseinheit (28, 30) mehrere, vorzugsweise genau zwei oder genau drei, Schwenkantriebseinheiten (28, 30) aufweist, die in Reihe zwischen dem Grundkörper (24) und der Halterung (26) angeordnet sind.

8. Fördereinrichtung (18) nach einem der vorherigen Ansprüche, wobei:
die Fördereinrichtung (18) als ein Abschnitt eines drehbaren Transportsterns (44) zum Transportieren von Behältern (12) ausgebildet ist; oder
die Fördereinrichtung (18) mindestens einen Magneten (36) zum Antreiben der Fördereinrichtung (18) entlang eines Führungselements (14) mittels eines Langstators (16) eines Langstator-Linearmotorsystems aufweist.

9. Fördereinrichtung (18) nach einem der vorherigen Ansprüche, wobei:
die Fördereinrichtung (18) einen, vorzugsweise wechselbaren und/oder wiederaufladbaren, elektrischen Energiespeicher (35) zur Versorgung der mindestens einen Schwenkantriebseinheit (28, 30), der Steuereinheit (32) und/oder des mindestens einen Sensors (34) aufweist.

10. Behälterbehandlungsanlage (48), aufweisend:
eine Behälterbehandlungsvorrichtung (52), vorzugweise eine Druckvorrichtung zum Bedrucken von Behältern (12), eine Prüfvorrichtung zum Prüfen von Behältern (12) oder eine Wiegevorrichtung zum Wiegen von Behältern (12), und
mindestens eine Fördereinrichtung (18) nach einem der Ansprüche 1 bis 9, die zum Passieren der Behälterbehandlungsvorrichtung (52) angeordnet ist, wobei die Steuereinheit (32) dazu ausgebildet ist, die mindestens eine Schwenkantriebseinheit (28, 30) so zu betreiben, dass die Halterung (26) beim Passieren der Behälterbehandlungsvorrichtung (52) eine vorbestimmte Orientierung einnimmt und/oder eine vorbestimmte Bewegung vollführt.

11. Behälterbehandlungsanlage (38), aufweisend:
eine Füllvorrichtung (42) zum Befüllen von Behältern (12) und/oder eine Verschließvorrichtung (46) zum Verschließen von Behältern (12); und
mindestens eine Fördereinrichtung (18) nach einem der Ansprüche 1 bis 9, die bezüglich eines Behälterstroms stromabwärts der Füllvorrichtung (42) und/oder stromaufwärts der Verschließvorrichtung (46) angeordnet ist.

12. Verfahren zum Transportieren eines Behälters (12) mittels der Fördereinrichtung (18) nach einem der Ansprüche 1 bis 9 oder in einer Behälterbehandlungsanlage (38, 48) nach Anspruch 10 oder 11, aufweisend:
Erfassen einer Beschleunigung, vorzugsweise einer Winkelbeschleunigung und/oder einer Linearbeschleunigung, einer Fördereinrichtung (18) mit einer Halterung (26), die den Behälter (12) hält; und
Verschwenken der Halterung (26) in Abhängigkeit von der erfassten Beschleunigung, vorzugsweise zum Verhindern eines Überschwappens eines flüssigen Mediums in dem Behälter (12).

13. Verfahren nach Anspruch 12, wobei:
die Halterung (26) um eine Nickachse, eine Gierachse und/oder eine Rollachse der Fördereinrichtung (18) verschwenkt wird; und/oder
die Halterung (26) bei einem Anfahren, Beschleunigen, Bewegen, Verzögern, Stoppen, Notstoppen und/oder einer Kurvenfahrt der Fördereinrichtung (18) verschwenkt wird, vorzugsweise wenn der Behälter (12) gefüllt und offen ist.

14. Verfahren nach Anspruch 12 oder Anspruch 13, wobei die Halterung (26) bei einer Bewegung der Fördereinrichtung (18) so verschwenkt wird, dass:
die Halterung (26) parallel zu einer Oberfläche eines flüssigen Mediums in dem von der Halterung (26) getragenen Behälter (12) ist; und/oder
eine Oberfläche eines flüssigen Mediums in dem von der Halterung (26) getragenen Behälter (12) rechtwinklig zu einer resultierenden Kraft aus einer Erdanziehungskraft und einer Zentripetalkraft bezüglich des Behälters (12) ist; und/oder
eine Hochachse des von der Halterung (26) getragenen Behälters (12) parallel zu einer resultierenden Kraft aus einer Erdanziehungskraft und einer Zentripetalkraft bezüglich des Behälters (12) ist.

15. Verfahren nach einem der Ansprüche 12 bis 14, ferner aufweisend:
Verschwenken der Halterung (26) in eine vorbestimmte Orientierung und/oder in einer vorbestimmten Bewegung, wenn die Fördereinrichtung (18) eine Behälterbehandlungsvorrichtung, vorzugsweise eine Druckvorrichtung zum Bedrucken des Behälters (12), eine Prüfvorrichtung zum Prüfen des Behälters (12) oder eine Wiegevorrichtung zum Wiegen des Behälters (12), passiert; und/oder
Bestimmen einer Gewichtskraft des Behälters (12) basierend auf einer Leistungsaufnahme mindestens einer Schwenkantriebseinheit (28, 30) zum Verschwenken der Halterung (26).

## Claims

1. A conveyor device (18) for transporting a container (12) for a container treatment system (38, 48), comprising:
a main body (24);
a holder (26) for holding the container (12);
at least one pivot drive unit (28, 30) pivotally connecting the holder (26) to the main body (24);
at least one sensor (34) configured to detect an acceleration, preferably an angular acceleration and/or a linear acceleration, of the conveyor device (18); and
a control unit (32) configured to operate the at least one pivot drive unit (28, 30) for pivoting the holder (26) based on a signal output of the at least one sensor (34), preferably for preventing a liquid medium from spilling over in the container (12) held by the holder (26),
**characterized in that** the control unit (32) is configured, for energy saving, to activate the at least one pivot drive unit (28, 30) and/or the at least one sensor (34) only in portions and/or to deactivate them outside predetermined portions.

2. The conveyor device (18) according to claim 1, wherein:
the at least one sensor (34) comprises a 1D, 2D or 3D angular acceleration sensor, preferably a 1D, 2D or 3D gyroscope sensor; and/or
the at least one sensor (34) comprises a 1D, 2D or 3D linear acceleration sensor.

3. The conveyor device (18) according to claim 1 or claim 2, wherein:
the at least one pivot drive unit (28, 30) connects the holder (26) to the main body (24) so as to be pivotable about a pitch axis, a roll axis and/or a yaw axis of the conveyor device (18).

4. The conveyor device (18) according to any of the preceding claims, wherein the control unit (32) is configured:
to pivot the holder (26) about a pitch axis of the conveyor device (18) by the at least one pivot drive unit (28, 30), preferably against a positive or negative acceleration direction of the conveyor device (18), during starting, accelerating, moving, decelerating, stopping and/or emergency stopping of the conveyor device (18); and/or
to pivot the holder (26) about a roll axis of the conveyor device (18) by the at least one pivot drive unit (28, 30) when the conveyor device (18) is cornering; and/or
to operate the at least one pivot drive unit (28, 30) for pivoting the holder (26) further based on a speed of the conveyor device (18), a mass of the container (12) held by the holder (26), a fill level of the container (12) held by the holder (26) and/or ambient conditions.

5. The conveyor device (18) according to any of the preceding claims, wherein the control unit (32) is configured:
to pivot the holder (26) by the at least one pivot drive unit (28, 30) such that when the conveyor device (18) moves, the holder (26) is parallel to a surface of a liquid medium in the container (12) carried by the holder (26); and/or
to pivot the holder (26) by the at least one pivot drive unit (28, 30) such that, when the conveyor device (18) moves, a surface of a liquid medium in the container (12) carried by the holder (26) is at right angles to a resultant force from a gravitational force and a centripetal force with respect to the container (12); and/or
to pivot the holder (26) by the at least one pivot drive unit (28, 30) such that, when the conveyor device (18) moves, a vertical axis of the container (12) carried by the holder (26) is parallel to a resultant force from a gravitational force and a centripetal force with respect to the container (12).

6. The conveyor device (18) according to any of the preceding claims, wherein the control unit (32) is configured
to determine a weight of the container (12) carried by the holder (26) based on a power consumption of the at least one pivot drive unit (28, 30).

7. The conveyor device (18) according to any of the preceding claims, wherein:
the at least one pivot drive unit (28, 30) has a plurality of, preferably exactly two or exactly three, pivot drive units (28, 30) which are arranged in series between the main body (24) and the holder (26).

8. The conveyor device (18) according to any of the preceding claims, wherein:
the conveyor device (18) is configured as a portion of a rotatable transport star (44) for transporting containers (12); or
the conveyor device (18) has at least one magnet (36) for driving the conveyor device (18) along a guide element (14) by a long stator (16) of a long stator linear motor system.

9. The conveyor device (18) according to any of the preceding claims, wherein:
the conveyor device (18) has a preferably exchangeable and/or rechargeable electrical energy store (35) for supplying the at least one pivot drive unit (28, 30), the control unit (32) and/or the at least one sensor (34).

10. A container treatment system (48), comprising:
a container treatment apparatus (52), preferably a printing apparatus for printing containers (12), a testing apparatus for testing containers (12) or a weighing apparatus for weighing containers (12), and
at least one conveyor device (18) according to any of claims 1 to 9, which is arranged to pass the container treatment apparatus (52), wherein the control unit (32) is configured to operate the at least one pivot drive unit (28, 30) such that the holder (26) assumes a predetermined orientation and/or performs a predetermined movement when passing the container treatment apparatus (52).

11. A container treatment system (38), comprising:
a filling apparatus (42) for filling containers (12) and/or a closing apparatus (46) for closing containers (12); and
at least one conveyor device (18) according to any of claims 1 to 9, which is arranged downstream of the filling apparatus (42) and/or upstream of the closing apparatus (46) with respect to a container flow.

12. A method for transporting a container (12) by the conveyor device (18) according to any of claims 1 to 9 or in a container treatment system (38, 48) according to claim 10 or 11, comprising:
detecting an acceleration, preferably an angular acceleration and/or a linear acceleration, of a conveyor device (18) having a holder (26) which holds the container (12); and
pivoting the holder (26) depending on the detected acceleration, preferably in order to prevent a liquid medium from spilling over in the container (12).

13. The method according to claim 12, wherein:
the holder (26) is pivoted about a pitch axis, a yaw axis and/or a roll axis of the conveyor device (18); and/or
the holder (26) is pivoted during starting, accelerating, moving, decelerating, stopping, emergency stopping and/or cornering of the conveyor device (18), preferably when the container (12) is full and open.

14. The method according to claim 12 or claim 13, wherein the holder (26) is pivoted when the conveyor device (18) moves such that:
the holder (26) is parallel to a surface of a liquid medium in the container (12) carried by the holder (26); and/or
a surface of a liquid medium in the container (12) carried by the holder (26) is at right angles to a resultant force from a gravitational force and a centripetal force with respect to the container (12); and/or
a vertical axis of the container (12) carried by the holder (26) is parallel to a resultant force from a gravitational force and a centripetal force with respect to the container (12).

15. The method according to any of claims 12 to 14, further comprising:
pivoting the holder (26) in a predetermined orientation and/or in a predetermined movement when the conveyor device (18) passes a container treatment apparatus, preferably a printing apparatus for printing the container (12), a testing apparatus for testing the container (12) or a weighing apparatus for weighing the container (12); and/or
determining a weight of the container (12) based on a power consumption of at least one pivot drive unit (28, 30) for pivoting the holder (26).

## Revendications

1. Dispositif de transport (18) permettant de transporter un récipient (12) pour une installation de traitement de récipients (38, 48), présentant :
un corps de base (24) ;
un moyen de maintien (26) destiné à maintenir le récipient (12) ;
au moins une unité d'entraînement en pivotement (28, 30) qui relie le moyen de maintien (26) au corps de base (24) de manière à pouvoir pivoter ;
au moins un capteur (34) qui est configuré pour détecter une accélération, de préférence une accélération angulaire et/ou une accélération linéaire, du dispositif de transport (18) ; et
une unité de commande (32) qui est configurée pour faire fonctionner l'au moins une unité d'entraînement en pivotement (28, 30) pour faire pivoter le moyen de maintien (26) sur la base d'une sortie de signal de l'au moins un capteur (34), de préférence pour empêcher un débordement d'un milieu liquide dans le récipient (12) maintenu par le moyen de maintien (26),
**caractérisé en ce que** l'unité de commande (32) est configurée pour activer l'au moins une unité d'entraînement en pivotement (28, 30) et/ou l'au moins un capteur (34) uniquement par intervalles et/ou pour les désactiver en dehors d'intervalles prédéterminés pour économiser de l'énergie.

2. Dispositif de transport (18) selon la revendication 1, dans lequel :
l'au moins un capteur (34) présente un capteur d'accélération angulaire 1D, 2D ou 3D, de préférence un capteur gyroscopique 1D, 2D ou 3D ; et/ou
l'au moins un capteur (34) présente un capteur d'accélération linéaire 1D, 2D ou 3D.

3. Dispositif de transport (18) selon la revendication 1 ou la revendication 2, dans lequel :
l'au moins une unité d'entraînement en pivotement (28, 30) relie le moyen de maintien (26) au corps de base (24) de manière à pouvoir pivoter autour d'un axe de tangage, d'un axe de roulis et/ou d'un axe de lacet du dispositif de transport (18).

4. Dispositif de transport (18) selon l'une des revendications précédentes, dans lequel l'unité de commande (32) est configurée pour :
faire pivoter le moyen de maintien (26) autour d'un axe de tangage du dispositif de transport (18) lors d'un démarrage, d'une accélération, d'un déplacement, d'une décélération, d'un arrêt et/ou d'un arrêt d'urgence du dispositif de transport (18) au moyen de l'au moins une unité d'entraînement en pivotement (28, 30), de préférence à l'encontre d'une direction d'accélération positive ou négative du dispositif de transport (18) ; et/ou
faire pivoter le moyen de maintien (26) autour d'un axe de roulis du dispositif de transport (18) lors d'un trajet en courbe du dispositif de transport (18) au moyen de l'au moins une unité d'entraînement en pivotement (28, 30) ; et/ou
faire fonctionner l'au moins une unité d'entraînement en pivotement (28, 30) pour faire pivoter le moyen de maintien (26) sur la base en outre d'une vitesse du dispositif de transport (18), d'une masse du récipient (12) maintenu par le moyen de maintien (26), d'un niveau de remplissage du récipient (12) maintenu par le moyen de maintien (26) et/ou de conditions environnementales.

5. Dispositif de transport (18) selon l'une des revendications précédentes, dans lequel l'unité de commande (32) est configurée pour :
faire pivoter le moyen de maintien (26) au moyen de l'au moins une unité d'entraînement en pivotement (28, 30) de sorte que, lors d'un mouvement du dispositif de transport (18), le moyen de maintien (26) est parallèle à une surface d'un milieu liquide dans le récipient (12) soutenu par le moyen de maintien (26) ; et/ou
faire pivoter le moyen de maintien (26) au moyen de l'au moins une unité d'entraînement en pivotement (28, 30) de sorte que, lors d'un mouvement du dispositif de transport (18), une surface d'un milieu liquide dans le récipient (12) soutenu par le moyen de maintien (26) est perpendiculaire à une force résultant d'une force d'attraction terrestre et d'une force centripète par rapport au récipient (12) ; et/ou
faire pivoter le moyen de maintien (26) au moyen de l'au moins une unité d'entraînement en pivotement (28, 30) de sorte que, lors d'un mouvement du dispositif de transport (18), un axe vertical du récipient (12) soutenu par le moyen de maintien (26) est parallèle à une force résultante d'une force d'attraction terrestre et d'une force centripète par rapport au récipient (12).

6. Dispositif de transport (18) selon l'une des revendications précédentes, dans lequel l'unité de commande (32) est configurée pour
déterminer, sur la base d'une puissance absorbée par l'au moins une unité d'entraînement en pivotement (28, 30), une force de poids du récipient (12) soutenu par le moyen de maintien (26).

7. Dispositif de transport (18) selon l'une des revendications précédentes, dans lequel :
l'au moins une unité d'entraînement en pivotement (28, 30) présente plusieurs, de préférence exactement deux ou exactement trois, unités d'entraînement en pivotement (28, 30) qui sont disposées en série entre le corps de base (24) et le moyen de maintien (26).

8. Dispositif de transport (18) selon l'une des revendications précédentes, dans lequel :
le dispositif de transport (18) est conçu comme une section d'une étoile de transport rotative (44) permettant de transporter des récipients (12) ; ou
le dispositif de transport (18) présente au moins un aimant (36) permettant d'entraîner le dispositif de transport (18) le long d'un élément de guidage (14) au moyen d'un stator long (16) d'un système de moteur linéaire à stator long.

9. Dispositif de transport (18) selon l'une des revendications précédentes, dans lequel :
le dispositif de transport (18) présente un accumulateur d'énergie électrique (35), de préférence interchangeable et/ou rechargeable, permettant d'alimenter l'au moins une unité d'entraînement en pivotement (28, 30), l'unité de commande (32) et/ou l'au moins un capteur (34).

10. Installation de traitement de récipients (48), présentant :
un dispositif de traitement de récipients (52), de préférence un dispositif d'impression permettant d'imprimer sur des récipients (12), un dispositif de contrôle permettant de contrôler des récipients (12) ou un dispositif de pesage permettant de peser des récipients (12), et
au moins un dispositif de transport (18) selon l'une des revendications 1 à 9 qui est disposé pour passer devant le dispositif de traitement de récipients (52), dans laquelle l'unité de commande (32) est configurée pour actionner l'au moins une unité d'entraînement en pivotement (28, 30) de sorte que le moyen de maintien (26) occupe une orientation prédéterminée et/ou effectue un mouvement prédéterminé lors du passage du dispositif de traitement de récipients (52).

11. Installation de traitement de récipients (38), présentant :
un appareil de remplissage (42) permettant de remplir des récipients (12) et/ou un appareil de fermeture (46) permettant de fermer des récipients (12) ; et
au moins un dispositif de transport (18) selon l'une des revendications 1 à 9, disposé en aval de l'appareil de remplissage (42) et/ou en amont de l'appareil de fermeture (46) par rapport à un flux de récipients.

12. Procédé permettant le transport d'un récipient (12) au moyen du dispositif de transport (18) selon l'une des revendications 1 à 9 ou dans une installation de traitement de récipients (38, 48) selon la revendication 10 ou 11, présentant :
la détection d'une accélération, de préférence d'une accélération angulaire et/ou d'une accélération linéaire, d'un dispositif de transport (18) comportant un moyen de maintien (26) qui maintient le récipient (12) ; et
le pivotement du moyen de maintien (26) en fonction de l'accélération détectée, de préférence pour empêcher un débordement d'un milieu liquide dans le récipient (12).

13. Procédé selon la revendication 12, dans lequel :
le moyen de maintien (26) est pivoté autour d'un axe de tangage, d'un axe de lacet et/ou d'un axe de roulis du dispositif de transport (18) ; et/ou
le moyen de maintien (26) est pivoté lors d'un démarrage, d'une accélération, d'un déplacement, d'une décélération, d'un arrêt, d'un arrêt d'urgence et/ou d'un trajet en courbe du dispositif de transport (18), de préférence lorsque le récipient (12) est rempli et ouvert.

14. Procédé selon la revendication 12 ou la revendication 13, dans lequel le moyen de maintien (26) est pivoté lors d'un mouvement du dispositif de transport (18) de sorte que :
le moyen de maintien (26) est parallèle à une surface d'un milieu liquide dans le récipient (12) soutenu par le moyen de maintien (26) ; et/ou
une surface d'un milieu liquide dans le récipient (12) soutenu par le moyen de maintien (26) est perpendiculaire à une force résultant d'une force d'attraction terrestre et d'une force centripète par rapport au récipient (12) ; et/ou
un axe vertical du récipient (12) soutenu par le moyen de maintien (26) est parallèle à une force résultante d'une force d'attraction terrestre et d'une force centripète par rapport au récipient (12).

15. Procédé selon l'une des revendications 12 à 14, présentant en outre :
le pivotement du moyen de maintien (26) dans une orientation prédéterminée et/ou dans un mouvement prédéterminé lorsque le dispositif de transport (18) passe devant un appareil de traitement de récipients, de préférence un appareil d'impression permettant d'imprimer sur le récipient (12), un appareil de contrôle permettant de contrôler le récipient (12) ou un appareil de pesage permettant de peser le récipient (12) ; et/ou
la détermination d'une force de poids du récipient (12) sur la base d'une puissance absorbée par au moins une unité d'entraînement en pivotement (28, 30) pour faire pivoter le moyen de maintien (26).
